# EUROPEAN PATENT APPLICATION

(11) **EP 4 092 891 A1**
(43) Date of publication of application: **23.11.2022**
(21) Application number: 22174100.2
(22) Date of filing: 18.05.2022
(51) Int. Cl.: H02M 1/00, H02M 7/487

(54) **CONVERSION CIRCUIT AND CONTROL METHOD THEREOF**

(30) Priority: 18.05.2021 CN 202110550838
(71) Applicant: Huawei Digital Power Technologies Co., Ltd., Shenzhen, 518043 (CN)
(72) Inventor: YAN, Fengsheng, Shenzhen, 518129 (CN)
(74) Representative: Gill Jennings & Every LLP

(57) **Abstract**

Embodiments of this application provide a conversion circuit and a control method thereof. The conversion circuit provided in embodiments of this application implements a function of a low-speed switch in an inverter by using the switch module, and implements a function of a high-speed switch in the inverter by using the bridge arm circuit. A circuit design is suitable and efficient, and can implement high efficiency at low costs. In addition, at least two bridge arm circuits are disposed in the circuit, which facilitates dynamic steady state current equalization and heat dispersion, and can implement high power density. In addition, the switch element in the bridge arm circuit can implement a zero voltage switch ZVS. Therefore, a loss of the conversion circuit provided in embodiments of this application is low.

## Description

### TECHNICAL FIELD

Embodiments of this application relate to the field of electronic circuit technologies, and in particular, to a conversion circuit and a control method thereof.

### BACKGROUND

With development of modern technologies, technologies related to a solar photovoltaic power generation system are becoming more mature. A photovoltaic (photovoltaic, PV) inverter is a main component of the solar photovoltaic power generation system. The PV inverter is used to convert a direct current power supply generated by a photovoltaic panel into an alternating current power supply (direct current power is converted into alternating current power).

A development trend of the PV inverter is high efficiency, high power density, and low costs. However, implementing high efficiency usually leads to lower power density, high costs, and a high weight/volume. Therefore, in an existing solution, the PV inverter either preferentially implements high efficiency or high power density, but cannot simultaneously implement high efficiency and high power density.

### SUMMARY

Embodiments of this application provide a conversion circuit and a control method thereof, to implement high efficiency and high power density at low costs.

According to a first aspect, an embodiment of this application provides a conversion circuit, including a switch module and at least one bridge arm circuit. The switch module includes a first direct current input end, a second direct current input end, a third direct current input end, a first output end, and a second output end. The switch module is configured to: conduct the first direct current input end to the first output end, conduct the third direct current input end to the second output end, and turn off the second direct current input end; or the switch module is configured to: conduct the third direct current input end to the first output end, conduct the second direct current input end to the second output end, and turn off the first direct current input end. The bridge arm circuit includes a first switch element, a second switch element, and a first inductor. One end of the first switch element is connected to the first output end of the switch module, the other end of the first switch element is connected to one end of the second switch element, and the other end of the second switch element is connected to the second output end of the switch module. A connection end between the first switch element and the second switch element is connected to one end of the first inductor, and the other end of the first inductor is connected to an alternating current output end.

The conversion circuit provided in this embodiment of this application implements a function (converting positive and negative half cycles of an alternating current output voltage) of a low-speed switch in an inverter by using the switch module, and implements a function (converting an alternating current output current direction) of a high-speed switch in the inverter by using the bridge arm circuit. A circuit design is suitable and efficient, and can implement high efficiency at low costs. In addition, at least two bridge arm circuits are disposed in the circuit, which facilitates dynamic steady state current equalization and heat dispersion, and can implement high power density. In addition, the switch element in the bridge arm circuit can implement a zero voltage switch ZVS. Therefore, a loss of the conversion circuit provided in this embodiment of this application is low.

With reference to the first aspect, in an implementation of this embodiment of this application, the circuit further includes a controller. The controller is connected to the switch module and is configured to: control the switch module to conduct the first direct current input end to the first output end, conduct the third direct current input end to the second output end, and turn off the second direct current input end; or control the switch module to conduct the third direct current input end to the first output end, conduct the second direct current input end to the second output end, and turn off the first direct current input end. The controller is also connected to the first switch element and the second switch element, and is configured to control on and off of the first switch element and the second switch element. This implementation makes the solution provided in this embodiment of this application more comprehensive.

With reference to the first aspect, in an implementation of this embodiment of this application, the switch module includes a third switch element, a fourth switch element, a fifth switch element, and a sixth switch element. The third switch element, the fourth switch element, the fifth switch element, and the sixth switch element are sequentially connected in series. A connection point between the third switch element and the fourth switch element is connected to the first output end, and a connection point between the fifth switch element and the sixth switch element is connected to the second output end. A non-series end of the third switch element is connected to the first direct current input end, a non-series end of the sixth switch element is connected to the second direct current input end, and a series middle point between the fourth switch element and the fifth switch element is connected to the third direct current input end. This implementation makes the solution provided in this embodiment of this application more comprehensive.

With reference to the first aspect, in an implementation of this embodiment of this application, the third switch element, the fourth switch element, the fifth switch element, and the sixth switch element each are at least one of an insulated gate bipolar transistor IGBT, a metal-oxide-semiconductor field-effect transistor MOSFET, a switching transistor, or a controllable switch. This implementation makes the solution provided in this embodiment of this application more comprehensive.

With reference to the first aspect, in an implementation of this embodiment of this application, the first switch element and the second switch element each are an insulated gate bipolar transistor IGBT, a metal-oxide-semiconductor field-effect transistor MOSFET, or a switching transistor. This implementation makes the solution provided in this embodiment of this application more comprehensive.

With reference to the first aspect, in an implementation of this embodiment of this application, a second inductor is further connected in series between the first inductor and the alternating current output end. This implementation makes the solution provided in this embodiment of this application more comprehensive.

With reference to the first aspect, in an implementation of this embodiment of this application, the circuit further includes a first capacitor, a second capacitor, and a photovoltaic power supply. A first end of the photovoltaic power supply is connected to the first direct current input end, and a second end of the photovoltaic power supply is connected to the second direct current input end. The first capacitor and the second capacitor are connected in series between the first end and the second end of the photovoltaic power supply. A series middle point between the first capacitor and the second capacitor is connected to the third direct current input end. This implementation makes the solution provided in this embodiment of this application more comprehensive.

With reference to the first aspect, in an implementation of this embodiment of this application, the series middle point between the first capacitor and the second capacitor is grounded. This implementation makes the solution provided in this embodiment of this application more comprehensive.

With reference to the first aspect, in an implementation of this embodiment of this application, different bridge arm circuits operate in a phase offset manner. This implementation makes the solution provided in this embodiment of this application more comprehensive.

According to a second aspect, an embodiment of this application provides a conversion circuit control method, used to control a circuit such as the circuit in the first aspect. The method includes: controlling a first switch element to be turned on when a drain-source voltage of the first switch element is resonant to 0, and controlling a second switch element to be turned on when a drain-source voltage of the second switch element is resonant to 0.

With reference to the second aspect, in an implementation of this embodiment of this application, the method further includes: when an output alternating current voltage is in a positive half cycle, turning on a third switch element and a fifth switch element in a switch module of the circuit, and turning off a fourth switch element and a sixth switch element in the switch module; and when the output alternating current voltage is in a negative half cycle, turning on the second switch element and the fourth switch element in the switch module, and turning off the first switch element and the third switch element in the switch module. This implementation makes the solution provided in this embodiment of this application more comprehensive.

With reference to the second aspect, in an implementation of this embodiment of this application, the method further includes: controlling different bridge arm circuits in the circuit to operate in a phase offset manner. This implementation makes the solution provided in this embodiment of this application more comprehensive.

### BRIEF DESCRIPTION OF DRAWINGS

FIG. 1a is a schematic diagram of a T-type inverter in the conventional technology;
FIG. 1b is a schematic diagram of an I-type inverter in the conventional technology;
FIG. 2 is a schematic diagram of a conversion circuit according to an embodiment of this application;
FIG. 3a is a schematic diagram of a running status of a conversion circuit according to an embodiment of this application;
FIG. 3b is a schematic diagram of another running status of a conversion circuit according to an embodiment of this application;
FIG. 4 is a circuit diagram of an implementation of a switch module 201 according to an embodiment of this application;
FIG. 5 is a schematic diagram of another connection method for an output end of a bridge arm circuit 202 according to an embodiment of this application;
FIG. 6a is a schematic diagram of a circuit including three bridge arm circuits 202 according to an embodiment of this application;
FIG. 6b is a schematic diagram of adding a plurality of bridge arm circuits 202 and a second inductor 209 according to an embodiment of this application;
FIG. 7 is an example diagram of a conversion circuit when a quantity of bridge arm circuits 202 is 1 according to an embodiment of this application;
FIG. 8a is a schematic diagram of a first direct current side connection method according to an embodiment of this application;
FIG. 8b is a schematic diagram of a second direct current side connection method according to an embodiment of this application;
FIG. 9 is a schematic diagram of connection of a controller 211 according to an embodiment of this application;
FIG. 10 is a schematic diagram of an on/off loss of a switching transistor S11 according to an embodiment of this application; and
FIG. 11 is a diagram of an operating waveform of a conversion circuit when an output voltage of an alternating current output end 208 is in a positive half cycle according to an embodiment of this application.

### DESCRIPTION OF EMBODIMENTS

Embodiments of this application provide a conversion circuit and a control method thereof, to implement high efficiency and high power density at low costs.

The terms "first", "second", "third", "fourth" and the like (if any) in the specification, claims, and the accompanying drawings of this application are used to distinguish between similar objects rather than to describe a particular order or sequence. It should be understood that the data termed in such a way are interchangeable in proper circumstances, so that embodiments described herein can be implemented in an order other than the order illustrated or described herein. Moreover, the terms "include", "contain" and any other variants mean to cover non-exclusive inclusion, for example, a process, method, system, product, or device that includes a list of steps or units is not necessarily limited to clearly list those units or steps, but may include another step or unit not clearly listed or inherent to such a process, method, product, or device.

In embodiments of this application, words such as "for example" or "such as" are used to represent examples, illustrations, or descriptions. Any embodiment or design solution described using "for example" or "such as" in embodiments of this application shall not be construed as being preferred or superior to other embodiments or design solutions. Specifically, the use of the words "for example" or "such as" is intended to present relevant concepts in a specific manner.

For clear and brief description of the following embodiments, a related technology is briefly described first.

An inverter converts direct current power (a battery and a storage battery) into alternating current power (usually a sine wave of 220 V and 50 Hz) with a constant frequency and a constant voltage or a regulated frequency and a regulated voltage. A majority of three-phase inverters found on the market today are three-level neutral point clamped (neutral point clamped, NPC) inverters (also referred to as I-type inverters) or three-level active NPC inverters (also referred to as T-type inverters).

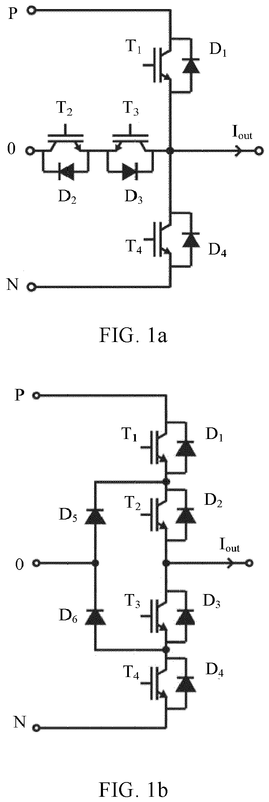

FIG. 1a is a schematic diagram of a T-type inverter in the conventional technology. In FIG. 1a, a P port of the T-type inverter may be connected to a positive electrode of a direct current power supply, an N port may be connected to a negative electrode of the direct current power supply, and a 0 port may be grounded or connected to a series middle point that is between the positive and negative electrodes of the direct current power supply and that is used to connect two capacitors in series. An output end is a connection point between a switching transistor D1 and a switching transistor D4.

FIG. 1b is a schematic diagram of an I-type inverter in the conventional technology. In FIG. 1b, a P port of the I-type inverter may be connected to a positive electrode of a direct current power supply, an N port may be connected to a negative electrode of the direct current power supply, and a 0 port may be grounded or connected to a series middle point that is between the positive and negative electrodes of the direct current power supply and that is used to connect two capacitors. An output end is a connection point between a switching transistor D2 and a switching transistor D3.

In this embodiment of this application, the switching transistor may be an insulated gate bipolar transistor (insulated gate bipolar transistor, IGBT), a metal-oxide-semiconductor field-effect transistor (metal-oxide-semiconductor field-effect transistor, MOSFET), a gate turn-off thyristor (gate turn-off thyristor, GTO), an N-channel MOS-controlled thyristor (N-channel MOS-controlled thyristor, NMCT), a bipolar junction transistor (bipolar junction transistor, BJT), a junction field-effect transistor (junction field-effect transistor, JFET), a diode, or the like. This is not limited in this embodiment of this application.

However, when processing a high power supply, the switching transistor tends to cause many problems that limit efficiency and/or power density, such as:
1. Dynamic steady state current equalization and heat concentration between parallel devices.
2. Reduction in switching frequency due to an increased commutation loss, which increases costs, a weight, and a size of a converter.
3. Another disadvantage of an existing solution is an electromagnetic interference (Electromagnetic Interference, EMI) level. The EMI level is very high and several stages of output filters are required to reduce a common mode (common mode, CM) noise and a differential mode (differential mode, CM) DM noise, thereby reducing performance and increasing a volume/costs of a unit. A power factor PF is low and total harmonic distortion THD is high. Similarly, a leakage current from a PV array to the ground is high (over 300 mA).

Therefore, if the converter is to be optimized for high power density, it will inevitably reduce efficiency and increase costs. A choice for optimization in the existing solution is a trade-off, either efficiency or high power density is ensured, but there is never simultaneous optimization of both. However, using a conversion circuit provided according to this application, it is possible to implement both high efficiency and high power density at low costs. The conversion circuit provided in this embodiment of this application is described in detail below.

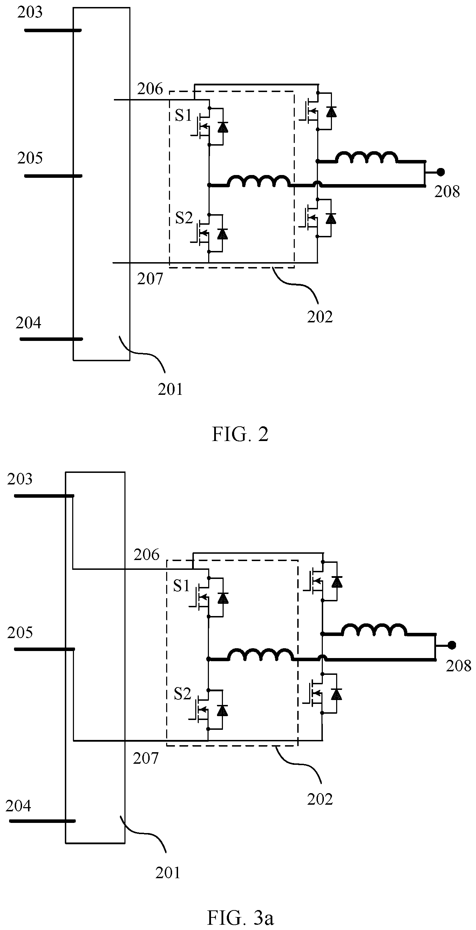

FIG. 2 is a schematic diagram of a conversion circuit according to an embodiment of this application. The circuit includes a switch module 201 and at least two bridge arm circuits 202. The switch module 201 includes a first direct current input end 203, a second direct current input end 204, a third direct current input end 205, a first output end 206, and a second output end 207. The bridge arm circuit 202 includes a first switch element S1, a second switch element S2, and a first inductor. One end of the first switch element S1 is connected to the first output end 206 of the switch module 201, and the other end of the first switch element S1 is connected to one end of the second switch element S2. The other end of the second switch element S2 is connected to the second output end 207 of the switch module 201. A connection end between the first switch element S1 and the second switch element S2 is connected to one end of the first inductor, and the other end of the first inductor is connected to an alternating current output end 208.

The conversion circuit provided in this embodiment of this application may be used as a three-phase multi-level inverter, and may be applied to but not limited to a photovoltaic power system, an uninterruptible power supply (Uninterruptible Power Supply, UPS), an alternating current motor driver, and a high-voltage direct current application. In addition, the conversion circuit provided in this embodiment of this application may be further used as a rectifier.

### 1. Switch module 201:

The switch module 201 is configured to: conduct the first direct current input end 203 to the first output end 206, conduct the third direct current input end 205 to the second output end 207, and turn off the second direct current input end 204; or configured to: conduct the third direct current input end 205 to the first output end 206, conduct the second direct current input end 204 to the second output end 207, and turn off the first direct current input end 203.

Specifically, FIG. 3a is a schematic diagram of a running status of a conversion circuit according to an embodiment of this application. In FIG. 3a, inside the switch module 201, the first direct current input end 203 is conducted to the first output end 206, the third direct current input end 205 is conducted to the second output end 207, and the second direct current input end 204 is turned off.

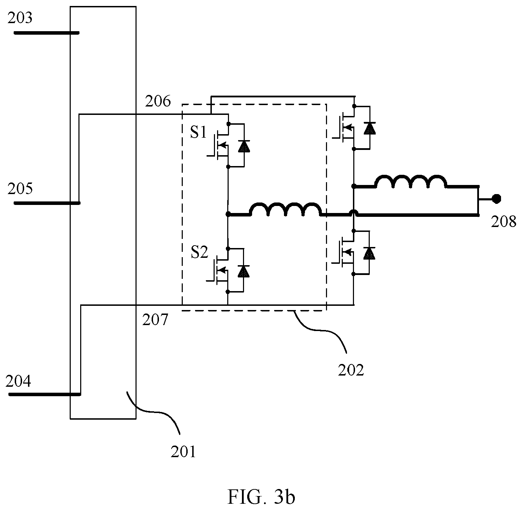

Specifically, FIG. 3b is a schematic diagram of another running status of the conversion circuit according to an embodiment of this application. In FIG. 3b, inside the switch module 201, the third direct current input end 205 is conducted to the first output end 206, the second direct current input end 204 is conducted to the second output end 207, and the first direct current input end 203 is turned off.

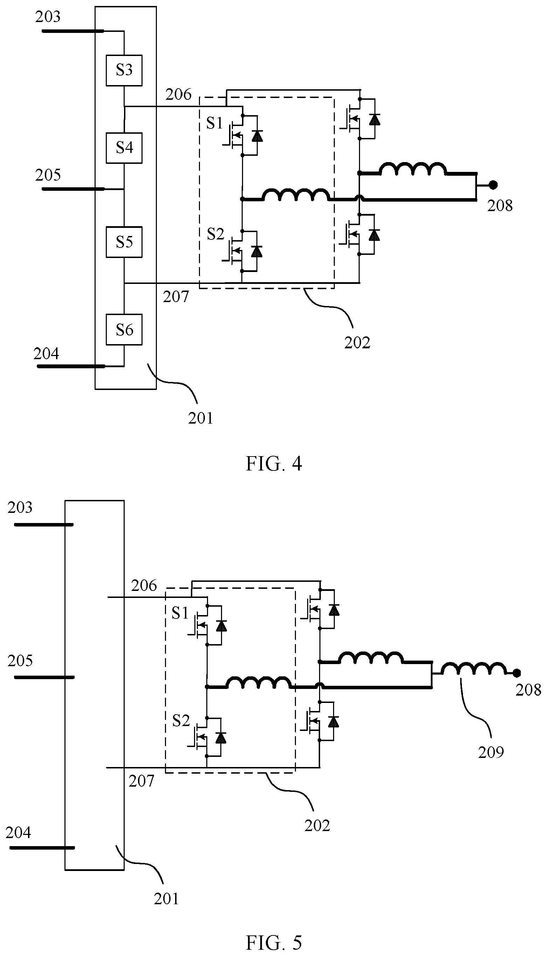

It may be understood that several switch components may be disposed inside the switch module 201 to achieve the foregoing effect. For example, an implementation of the switch module 201 provided in this embodiment of this application is shown in FIG. 4. FIG. 4 is a circuit diagram of an implementation of the switch module 201 according to an embodiment of this application. A third switch element S3, a fourth switch element S4, a fifth switch element S5, and a sixth switch element S6 are disposed inside the switch module 201 in FIG. 4. The third switch element S3 is connected in series between the first direct current input end 203 and the first output end 206, the fourth switch element S4 is connected in series between the third direct current input end 205 and the first output end 206, the fifth switch element S5 is connected in series between the third direct current input end 205 and the second output end 207, and the sixth switch element S6 is connected in series between the second direct current input end 204 and the second output end 207.

Therefore, it can be learned from FIG. 4 that, when the third switch element S3 is turned on, the fourth switch element S4 is turned off, the fifth switch element S5 is connected, and the sixth switch element S6 is turned off, a running status of the switch module 201 is similar to that in FIG. 3a. To be specific, the first direct current input end 203 is conducted to the first output end 206, the third direct current input end 205 is conducted to the second output end 207, and the second direct current input end 204 is turned off. When the third switch element S3 is turned off, the fourth switch element S4 is turned on, the fifth switch element S5 is turned off, and the sixth switch element S6 is turned on, a running status of the switch module 201 is similar to that in FIG. 3b. To be specific, the third direct current input end 205 is conducted to the first output end 206, the second direct current input end 204 is conducted to the second output end 207, and the first direct current input end 203 is turned off.

In actual application, the foregoing switch elements (including the third switch element S3, the fourth switch element S4, the fifth switch element S5, and the sixth switch element S6) may be IGBTs, MOSFETs, switching transistors, or common controllable switches (for example, electrically controlled switches). This is not limited in embodiments of this application.

In embodiments of this application, the third switch element S3, the fourth switch element S4, the fifth switch element S5, and the sixth switch element S6 of the switch module 201 are connected in parallel in an interleaved manner, and can be shared. When carrying a high current of a direct current power supply, the switch component in the switch module 201 provided in embodiments of this application may use a slow IGBT, so that a turn-on loss is low, and there is basically no impact at a high temperature.

### 2. Bridge arm circuit 202:

In embodiments corresponding to FIG. 2, FIG. 3a, FIG. 3b, and FIG. 4, the bridge arm circuits 202 of the conversion circuit may operate in a phase offset manner, that is, operate at phases with a proper phase difference. For example, if there are two bridge arm circuits 202 in the circuit corresponding to the foregoing embodiment, the two bridge arm circuits 202 operate at 180 degrees of phase offset. If there are three bridge arm circuits 202 in the circuit corresponding to the foregoing embodiment, the three bridge arm circuits 202 operate at 120 degrees of phase offset. A specific principle is similar to that of a conventional multi-channel interleaving inverter, and details are not described herein.

One of the bridge arm circuits 202 is described in detail below: The bridge arm circuit 202 includes the first switch element S1, the second switch element S2, and the first inductor. One end of the first switch element S1 is connected to the first output end 206 of the switch module 201, and the other end of the first switch element S1 is connected to one end of the second switch element S2. The other end of the second switch element S2 is connected to the second output end 207 of the switch module 201. The connection end between the first switch element S1 and the second switch element S2 is connected to one end of the first inductor, and the other end of the first inductor is connected to the alternating current output end 208.

In some embodiments, an output end of the bridge arm circuit 202 (that is, the other end of the first inductor) may be connected to the alternating current output end 208 by using a second inductor 209, as shown in FIG. 5 (FIG. 5 is a schematic diagram of another connection method for the output end of the bridge arm circuit 202 according to an embodiment of this application). Compared with the circuit shown in FIG. 2, the circuit shown in FIG. 5 adds the second inductor 209. The second inductor 209 may further adjust an impedance of the alternating current output end 208, to improve performance of the inverter.

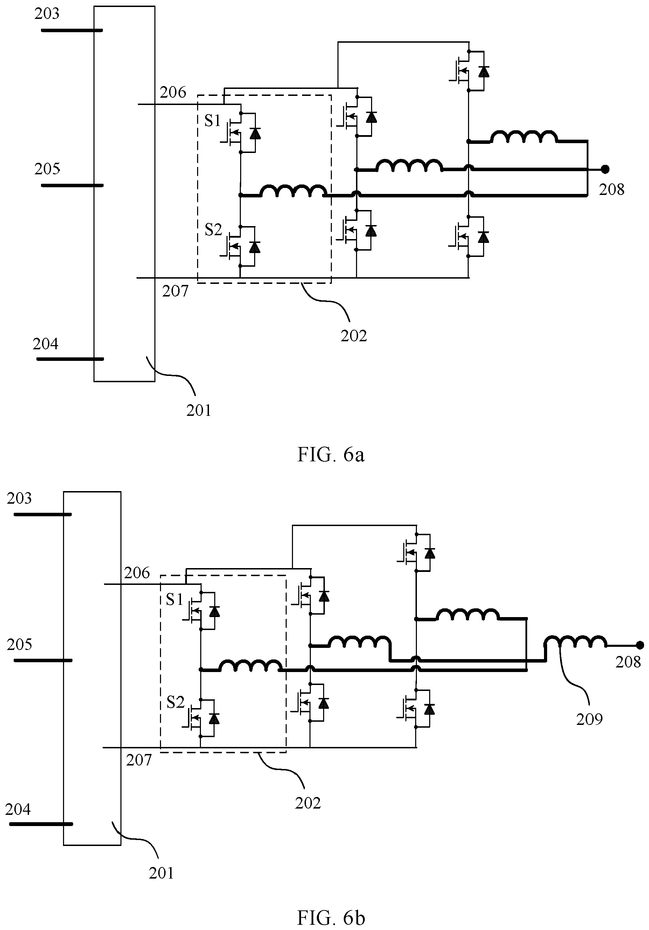

In some other embodiments, there may be a plurality of bridge arm circuits 202. A quantity of bridge arm circuits 202 is not limited in this embodiment of this application. FIG. 6a is a schematic diagram of a circuit including three bridge arm circuits 202 according to an embodiment of this application. The circuit shown in FIG. 6a includes three bridge arm circuits 202. Output ends of the three bridge arm circuits 202 are jointly connected to the alternating current output end 208, and input ends of the three bridge arm circuits 202 are all connected to the first output end 206 and the second output end 207 of the switch module 201. In this embodiment, more bridge arm circuits 202 are added, which facilitates dynamic steady state current equalization and heat dispersion, and improves performance of the inverter.

In some other embodiments, the second inductor 209 may also be added based on the circuit shown in FIG. 6a. FIG. 6b is a schematic diagram of adding a plurality of bridge arm circuits 202 and a second inductor 209 according to an embodiment of this application. The circuit shown in FIG. 6b can significantly improve performance of the inverter.

In actual application, based on device costs and conditions in various aspects, a designer may adjust the quantity of bridge arm circuits 202 in the inverter and an inductance value of the second inductor 209 based on an actual requirement. This is not limited in this embodiment of this application.

It may be understood that switch elements in the bridge arm circuit 202 (including the first switch element S1 and the second switch element S2) each may be an IGBT, a MOSFET, a switching transistor, or a common controllable switch (for example, an electrically controlled switch). This is not limited in this embodiment of this application.

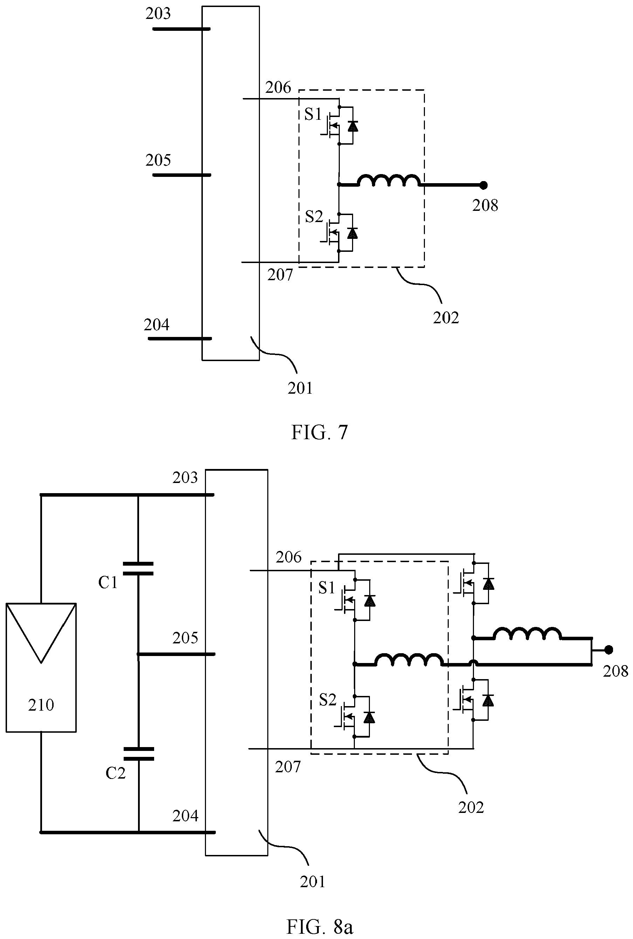

In some embodiments, if an output power requirement of the conversion circuit is not high, the conversion circuit may reduce the quantity of bridge arm circuits 202, and the conversion circuit may reduce the quantity of bridge arm circuits 202 to one at most. In this case, an operating condition of the switch elements of the bridge arm circuit 202 remains unchanged (the operating condition is the same as the operating situation of the foregoing one bridge arm circuit 202), which can implement a lower power output. In actual application, an operating condition of one of the bridge arm circuits 202 of the conversion circuit is the same as the operating condition of the foregoing bridge arm circuit 202, while switch elements of the other bridge arm circuits 202 may be set to an off state, which is equivalent to disconnecting the other bridge arm circuits 202, to reduce the quantity of bridge arm circuits 202 to one. The conversion circuit when the quantity of the bridge arm circuits 202 is reduced to one may be shown in FIG. 7 (FIG. 7 is an example diagram of a conversion circuit when a quantity of bridge arm circuits 202 is 1 according to an embodiment of this application).

### 3. Direct current side circuit:

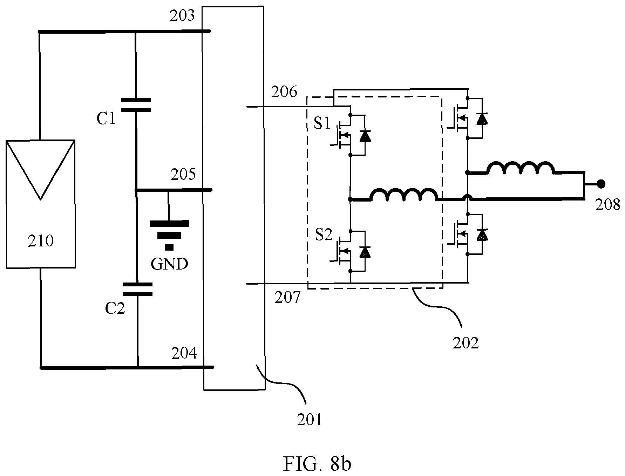

In this embodiment of this application, the direct current side circuit may have a plurality of connection methods. In this embodiment of this application, two connection methods of the photovoltaic power supply are respectively shown in FIG. 8a and FIG. 8b.

FIG. 8a is a schematic diagram of a first direct current side connection method according to an embodiment of this application. In FIG. 8a, two ends of a photovoltaic power supply 210 are respectively connected to the first direct current input end 203 and the second direct current input end 204. Optionally, a positive electrode end of the photovoltaic power supply 210 is connected to the first direct current input end 203, and a negative electrode end of the photovoltaic power supply 210 is connected to the second direct current input end 204. Two capacitors, namely, a capacitor C1 and a capacitor C2, are connected in series between the two ends of the photovoltaic power supply 210. A connection end between the capacitor C1 and the capacitor C2 may be connected to the third direct current input end 205.

FIG. 8b is a schematic diagram of a second direct current side connection method according to an embodiment of this application. In FIG. 8b, two ends of the photovoltaic power supply 210 are respectively connected to the first direct current input end 203 and the second direct current input end 204. Optionally, a positive electrode end of the photovoltaic power supply 210 is connected to the first direct current input end 203, and a negative electrode end of the photovoltaic power supply 210 is connected to the second direct current input end 204. Two capacitors, namely, a capacitor C1 and a capacitor C2, are connected in series between the two ends of the photovoltaic power supply 210. A connection end (that is, a series middle point) between the capacitor C1 and the capacitor C2 may be connected to the third direct current input end 205. In addition, the series middle point between the capacitor C1 and the capacitor C2 is grounded.

In actual application, in addition to the two connection methods in FIG. 8a and FIG. 8b, another connection method for a direct current power supply (for example, the photovoltaic power supply 210) may also exist. This is not limited in this embodiment of this application.

### 4. Controller 211:

In this embodiment of this application, the controller 211 may be connected to the switch module 201 and the bridge arm circuit 202, to control the switch module 201 and the bridge arm circuit 202 to implement a function required by the inverter. Specifically, the controller 211 may be connected to the switch elements in the switch module 201 and the switch elements in the bridge arm circuit 202 to implement a function required by the inverter.

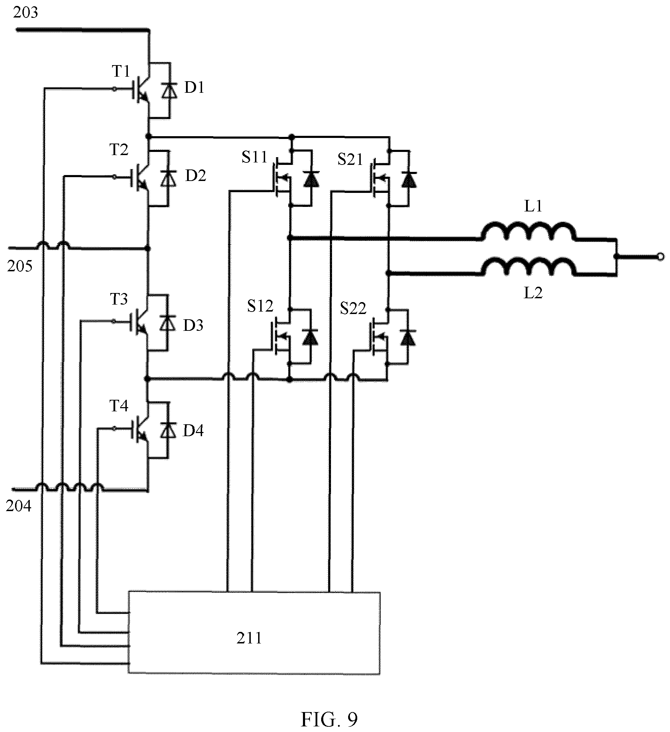

FIG. 9 is a schematic diagram of connection of the controller 211 according to an embodiment of this application. For clear description, in the switch module 201, a third switch element S3 is specifically a switching transistor T1, a fourth switch element S4 is specifically a switching transistor T2, a fifth switch element S5 is specifically a switching transistor T3, and a sixth switch element S6 is specifically a switching transistor T4. A first bridge arm circuit 202 includes a switching transistor S11, a switching transistor S12, and an inductor L1, and a second bridge arm circuit 202 includes a switching transistor S21, a switching transistor S22, and an inductor L2. To control the switch module 201 and the two bridge arm circuits 202, the controller 211 may be connected to the switching transistor T1, the switching transistor T2, the switching transistor T3, the switching transistor T4, the switching transistor S11, the switching transistor S12, the switching transistor S21, and the switching transistor S22, to control on and off of the switching transistor T1, the switching transistor T2, the switching transistor T3, the switching transistor T4, the switching transistor S11, the switching transistor S12, the switching transistor S21, and the switching transistor S22.

Specifically, the controller 211 may control corresponding switching transistors to be turned on when drain-source voltages of the switching transistor S11, the switching transistor S12, the switching transistor S21, and the switching transistor S22 are resonant to 0, to implement a zero voltage switch (zero voltage switch, ZVS). For example, when the drain-source voltage of the switching transistor S11 is resonant to 0, the switching transistor S11 is controlled to be turned on, and when the drain-source voltage of the switching transistor S12 is resonant to 0, the switching transistor S12 is controlled to be turned on.

In addition, the controller 211 may control a positive half cycle or a negative half cycle of an output alternating current voltage by controlling the switch elements in the switch module 201. That is, when the output alternating current voltage is in the positive half cycle, the controller 211 may turn on the switching transistor T1 and the switching transistor T3, and turn off the switching transistor T2 and the switching transistor T4, and when the output alternating current voltage is in the negative half cycle, the controller 211 may turn on the switching transistor T2 and the switching transistor T4, and turn off the switching transistor T1 and switching transistor T3.

In addition, the controller 211 may also control different bridge arm circuits 202 to operate in a phase offset manner. In the circuit shown in FIG. 9, there are two bridge arm circuits 202 in total, and the controller 211 may control the two bridge arm circuits to operate at 180 degrees of phase offset. If the controller 211 controls the inverter (including three bridge arm circuits 202) shown in FIG. 6a, the controller 211 may control the three bridge arm circuits to operate at 120 degrees of phase offset.

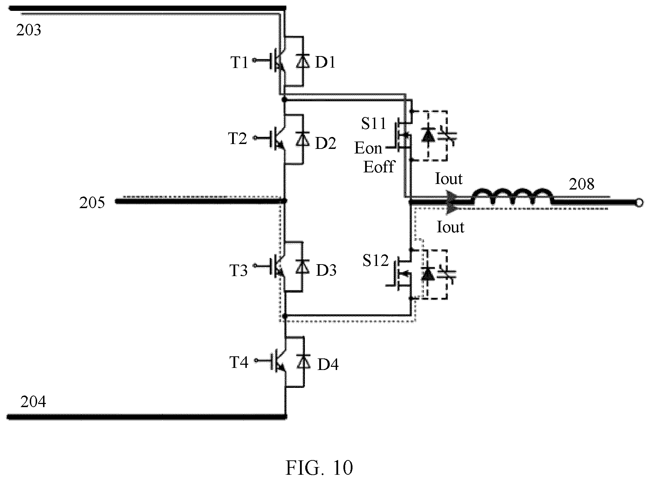

FIG. 10 is a schematic diagram of an on/off loss of the switching transistor S11 according to an embodiment of this application. When the controller 211 turns on the switching transistor T1 and the switching transistor T3, and turns off the switching transistor T2 and the switching transistor T4, a turn-on switching loss (Turn-On switching loss, Eon) and a turn-off switching loss (Turn-off switching loss, Eoff) are generated. To reduce the loss, a designer usually expects to be able to implement a zero voltage switch (zero voltage switch, ZVS) or a zero current switch (Zero Current Switch, ZCS). The following explains how the zero voltage switch (zero voltage switch, ZVS) or the zero current switch (Zero Current Switch, ZCS) is implemented in this embodiment of this application by using a specific case in which the inverter is operating in a triangular current mode (Triangular Current Mode, TCM) as shown in FIG. 9.

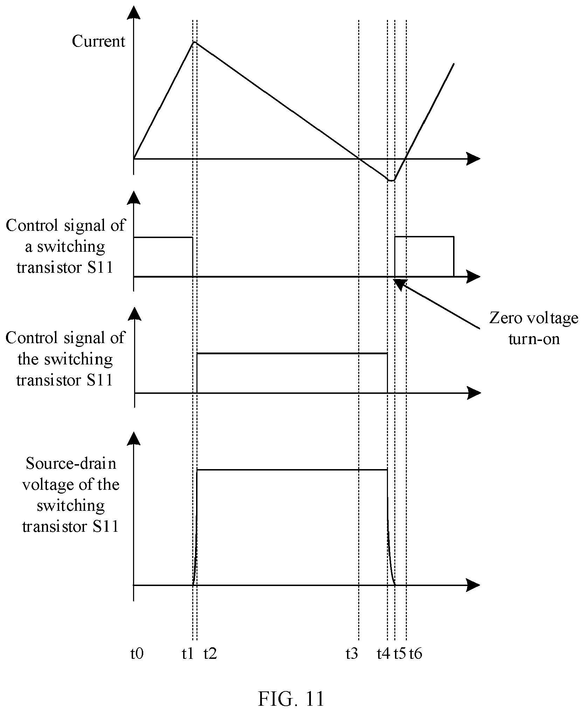

To clearly describe a control method for the controller 211, a time period of an output positive half cycle of the alternating current output end 208 is explained with reference to an operating waveform diagram shown in FIG. 11 (when an output voltage of the alternating current output end 208 is in the positive half cycle, the switching transistor T1 and the switching transistor T3 are turned on, the switching transistor T2 is turned off, and the switching transistor T4 is turned off, where the switching transistor S11 and the switching transistor S12 are high-frequency complementary switches, and the switching transistor S21 and the switching transistor S22 have phase offset of 180 degrees relative to the switching transistor S11 and the switching transistor S12).

As shown in FIG. 11, from a moment to to a moment t₁, the controller 211 controls the switching transistor S11 to be turned on. In this case, a voltage difference between a voltage of a positive half bus and that of the alternating current output end 208 is applied to the inductor L1, so that a current on the inductor L1 rises, and reaches a highest point at the moment t₁.

At the moment t₁, the controller 211 controls the switching transistor S11 to be turned off.

As shown in FIG. 11, from the moment t₁ to a moment t₂, the switching transistor S11 is turned off, and the switching transistor S12 is also turned off. Therefore, a junction capacitance of the switching transistor S12 is discharged, and a junction capacitance of the switching transistor S11 is charged. In this case, the junction capacitance of the switching transistor S12, the junction capacitance of the switching transistor S11, and the inductor L are resonant. When the drain-source voltage of the switching transistor S12 is resonant to 0, the controller 211 may control the switching transistor S12 to be turned on, to implement a ZVS.

In the example shown in FIG. 11, the controller 211 controls the switching transistor S12 to be turned on at the moment t₂. It may be understood that, a circuit designer may obtain, by calculation based on a circuit parameter, a moment at which the drain-source voltage of the switching transistor S12 is resonant to 0, that is, the moment t₂, and the circuit designer may set the controller 211 to control the switching transistor S12 to be turned on at the moment t₂.

As shown in FIG. 11, from the moment t₂ to a moment t₃, the switching transistor S11 is turned off, and the switching transistor S12 is turned on, so that the current on the inductor L1 drops to 0. It may be understood that, when the switching transistor S12 uses the MOSFET, synchronous rectification may be implemented for the switching transistor S12 from the moment t₂ to the moment t₃, to further reduce a turn-on loss of the switching transistor S12.

As shown in FIG. 11, from the moment t₃ to a moment t₄, the switching transistor S11 is turned off, and the switching transistor S12 is turned on, so that the current on the inductor L1 becomes a negative current.

At the moment t₄, the controller 211 controls the switching transistor S12 to be turned off.

As shown in FIG. 11, from the moment t₄ to a moment t₅, the switching transistor S11 is turned off, and the switching transistor S12 is also turned off. Therefore, the junction capacitance of the switching transistor S12 is charged, and the junction capacitance of the switching transistor S11 is discharged. In this case, the junction capacitance of the switching transistor S12, the junction capacitance of the switching transistor S11, and the inductor L are resonant. When the drain-source voltage of the switching transistor S11 is resonant to 0, the controller 211 may control the switching transistor S11 to be turned on, to implement a ZVS.

In the example shown in FIG. 11, the controller 211 controls the switching transistor S11 to be turned on at the moment t₅. It may be understood that, a circuit designer may obtain, by calculation based on a circuit parameter, a moment at which the drain-source voltage of the switching transistor S11 is resonant to 0, that is, the moment t₅, and the circuit designer may set the controller 211 to control the switching transistor S11 to be turned on at the moment t₅.

As shown in FIG. 11, from the moment t₅ to a moment t₆, the switching transistor S11 is turned on, and the switching transistor S12 is turned off. In this case, the current on the inductor L1 rises, and reaches 0 at the moment t₆.

A process after the moment t₆ enters a next period, that is, the process is repeated with the process after the moment to. Therefore, details are not described again.

It may be understood that, in the foregoing process, the controller 211 provided in this embodiment of this application controls the switching transistor S11 and the switching transistor S12 to be turned on when the drain-source voltage is resonant to 0, to implement a ZVS.

The foregoing process is a situation when the output voltage of the alternating current output end 208 is in the positive half cycle. A situation when the output voltage of the alternating current output end 208 is in a negative half cycle is similar. Refer to the foregoing process, and details are not described herein again.

It may be understood that, the controller 211 may detect, by using a voltage sensor, the drain-source voltages of the switching transistor S11 and the switching transistor S12, or may calculate and estimate the drain-source voltages of the switching transistor S11 and the switching transistor S12 in another manner. This is not limited in this embodiment of this application.

The conversion circuit provided in this embodiment of this application actually has two characteristics: multi-level and a soft switch. The multi-level is a hot topic in power conversion research, and has the following outstanding advantages: Each power device does not need to bear an entire bus voltage and can use a low voltage device to implement high voltage and large power output, no dynamic voltage equalization technology is needed, and reliability is high; an output waveform is improved by increasing a quantity of levels, and output characteristics of a two-level converter at a same high switching frequency can be obtained at a lower switching frequency, so that a switching loss is small and efficiency is high; and at a same switching frequency, output waveform distortion is smaller than that of the two-level converter, which greatly reduces costs and a volume of a passive filter.

A switch power supply operates in a hard switch mode (voltage drop/up and current up/drop waveforms overlap during an on/off process), so that a switching loss is large. A high frequency can reduce a volume and a weight, but the switching loss is greater. For this reason, it is necessary to study a technology in which switching voltage/current waveforms do not overlap, namely, a zero voltage switch (ZVS)/zero current switch (ZCS) technology, or referred to as a soft switch technology. Therefore, it can be learned from the descriptions of the foregoing embodiments that embodiments of this application can implement the soft switch technology, that is, can reduce the switching loss.

In addition, the conversion circuit provided in embodiments of this application has same input and output power, and has a good reactive power capability. Therefore, the conversion circuit provided in embodiments of this application may implement an efficient inverter function, and be used as an inverter, or may implement an efficient rectification function, and be used as a rectifier. In addition, in the conversion circuit in embodiments of this application, a high-speed switch is separated from a low-speed switch, and a three-level switch and a soft switch are implemented at the same time.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on multiple network units. Some or all of the units may be selected depending on actual requirements to achieve the objectives of the solutions in the embodiments.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A conversion circuit, comprising a switch module and at least one bridge arm circuit, wherein
the switch module comprises a first direct current input end, a second direct current input end, a third direct current input end, a first output end, and a second output end;
the switch module is configured to: conduct the first direct current input end to the first output end, conduct the third direct current input end to the second output end, and turn off the second direct current input end; or the switch module is configured to: conduct the third direct current input end to the first output end, conduct the second direct current input end to the second output end, and turn off the first direct current input end;
the bridge arm circuit comprises a first switch element, a second switch element, and a first inductor;
one end of the first switch element is connected to the first output end of the switch module, the other end of the first switch element is connected to one end of the second switch element;
the other end of the second switch element is connected to the second output end of the switch module; and
a connection end between the first switch element and the second switch element is connected to one end of the first inductor, and the other end of the first inductor is connected to an alternating current output end.

2. The circuit according to claim 1, wherein the circuit further comprises a controller, wherein
controller is connected to the switch module and is configured to: control the switch module to conduct the first direct current input end to the first output end, conduct the third direct current input end to the second output end, and turn off the second direct current input end; or control the switch module to conduct the third direct current input end to the first output end, conduct the second direct current input end to the second output end, and turn off the first direct current input end; and
the controller is also connected to the first switch element and the second switch element, and is configured to control on and off of the first switch element and the second switch element.

3. The circuit according to claim 1 or 2, wherein the switch module comprises a third switch element, a fourth switch element, a fifth switch element, and a sixth switch element, wherein
the third switch element, the fourth switch element, the fifth switch element, and the sixth switch element are sequentially connected in series;
a connection point between the third switch element and the fourth switch element is connected to the first output end, and a connection point between the fifth switch element and the sixth switch element is connected to the second output end; and
a non-series end of the third switch element is connected to the first direct current input end, a non-series end of the sixth switch element is connected to the second direct current input end, and a series middle point between the fourth switch element and the fifth switch element is connected to the third direct current input end.

4. The circuit according to claim 3, wherein the third switch element, the fourth switch element, the fifth switch element, and the sixth switch element each are at least one of an insulated gate bipolar transistor IGBT, a metal-oxide-semiconductor field-effect transistor MOSFET, a switching transistor, or a controllable switch.

5. The circuit according to any one of claims 1 to 4, wherein the first switch element and the second switch element each are an insulated gate bipolar transistor IGBT, a metal-oxide-semiconductor field-effect transistor MOSFET, or a switching transistor.

6. The circuit according to any one of claims 1 to 5, wherein a second inductor is further connected in series between the first inductor and the alternating current output end.

7. The circuit according to any one of claims 1 to 6, wherein the circuit further comprises a first capacitor, a second capacitor, and a photovoltaic power supply, wherein
a first end of the photovoltaic power supply is connected to the first direct current input end;
a second end of the photovoltaic power supply is connected to the second direct current input end;
the first capacitor and the second capacitor are connected in series between the first end and the second end of the photovoltaic power supply; and
a series middle point between the first capacitor and the second capacitor is connected to the third direct current input end.

8. The circuit according to claim 7, wherein the series middle point between the first capacitor and the second capacitor is grounded.

9. The circuit of any one of claims 1 to 8, wherein different bridge arm circuits operate in a phase offset manner.

10. A conversion circuit control method, used to control the circuit according to any one of claims 1 to 9, wherein the method comprises:
controlling a first switch element to be turned on when a drain-source voltage of the first switch element is resonant to 0; and
controlling a second switch element to be turned on when a drain-source voltage of the second switch element is resonant to 0.

11. The method according to claim 10, wherein the method further comprises:
when an output alternating current voltage is in a positive half cycle, turning on a third switch element and a fifth switch element in a switch module of the circuit, and turning off a fourth switch element and a sixth switch element in the switch module; and
when the output alternating current voltage is in a negative half cycle, turning on the second switch element and the fourth switch element in the switch module, and turning off the first switch element and the third switch element in the switch module.

12. The method according to claim 10 or 11, wherein the method further comprises:
controlling different bridge arm circuits in the circuit to operate in a phase offset manner.
